Europäisches Patentamt

European Patent Office

Office européen des brevets

(19)

(11) Numéro de publication : **0 092 093**
**B1**

## FASCICULE DE BREVET EUROPÉEN

(12)

(45) Date de publication du fascicule du brevet :
18.06.86

(21) Numéro de dépôt : 83103281.8

(22) Date de dépôt : 02.04.83

(51) Int. Cl.⁴ : **B 65 G 47/24**, B 65 G 57/081,
B 65 G 57/00, B 65 G 57/18

(54) **Procédé et installation de manutention de tuyaux en fonte à emboîtements en vue de leur retournement tête-bêche.**

(30) Priorité : 16.04.82 FR 8206718

(43) Date de publication de la demande :
26.10.83 Bulletin 83/43

(45) Mention de la délivrance du brevet :
18.06.86 Bulletin 86/25

(84) Etats contractants désignés :
DE GB

(56) Documents cités :
DE-A- 1 928 696

(73) Titulaire : **PONT-A-MOUSSON S.A.**
**91, Avenue de la Libération**
**F-54017 Nancy (FR)**

(72) Inventeur : **Malivoir, Roger**
**21 Pré Hayer**
**F-54700 Pont-A-Mousson (FR)**
Inventeur : **Mayer, Gilbert**
**74 rue de la République**
**F-54000 Nancy (FR)**

(74) Mandataire : **Puit, Thierry et al**
**c/o Centre de Recherches de Pont-à-Mousson B.P. 28**
**F-54703 Pont-à-Mousson Cedex (FR)**

## Description

La présente invention est relative à la manutention de tuyaux en fonte à emboîtement à la sortie de machines à centrifuger et d'un poste de revêtement. Plus précisément, l'invention concerne la manutention des tuyaux sur un transporteur horizontal ou à peu près horizontal entre la sortie de la fabrication de ces tuyaux et un transporteur de confection de lits de tuyaux disposés tête-bêche, en nombre pair ou impair, un emboîtement d'un tuyau alternant avec un bout uni du tuyau suivant. Les lits successifs sont destinés à être superposés pour confectionner des paquets liés.

Comme les paquets de tuyaux à confectionner doivent conserver des dimensions et poids compatibles avec les engins et véhicules de manutention, l'invention s'applique plus particulièrement à des tuyaux de petits diamètres de 60 à 300 mm ou à la rigueur moyens diamètres mais ne dépassant pas 600 mm par exemple.

Que les lits comportent un nombre pair ou un nombre impair de tuyaux, un emboîtement alterne avec un bout uni, dans les paquets confectionnés, aussi bien horizontalement sur le même lit que verticalement entre deux lits voisins superposés. Il en résulte que le moyen de manutention connu pour préparer les lits à superposer consiste à amener les tuyaux sur un transporteur horizontal, tous les emboîtements étant orientés dans le même sens, et, dans le cas général, à retourner de 180° un tuyau sur deux, sur ce transporteur, à l'aide d'un appareil de levage et de retournement dit retourneur, à un poste de retournement fixe. A l'aval du poste de retournement, les tuyaux sont prélevés pour confectionner des lits successifs et ensuite les empiler sur un chariot d'emballage (pose de liens) et d'évacuation.

Dans un but de comptage, en vue de confectionner les lits à empiler, les tuyaux sont reçus individuellement sur des supports en vés espacés d'intervalles réguliers appelés pas sur le transporteur horizontal. Les chaînes sans fin du transporteur horizontal avancent par intermittence en marquant des temps d'arrêt régulièrement espacés pour les opérations de dépôt, de retournement et d'enlèvement de tuyaux.

La technique connue permet donc de retourner de 180° un tuyau sur deux, lors d'un arrêt du transporteur, à un poste fixe de retournement, à condition que tous les vés consécutifs de support de tuyaux reçoivent un tuyau ou bien, si cette condition n'est pas respectée, à condition que le transporteur avance pas à pas.

Or, pour des raisons de contrôle de qualité et de productivité, aucune de ces deux conditions n'est respectée : les tuyaux sont fabriqués deux par deux dans des machines à centrifuger jumelées et sont déposés deux par deux sur les deux paires de vés consécutives du transporteur qui, pour cette raison, avance de deux pas à la fois. De plus, à l'amont du retourneur, un contrôle de qualité des tuyaux est exercé et des tuyaux non satisfaisants sont retirés de temps à autre du transporteur, soit pour être retouchés, soit pour être mis au rebut. Il en résulte que, avec une avance de deux pas et avec un transporteur incomplètement empli de tuyaux, la probabilité est élevée que le retourneur placé à un poste fixe de retournement trouve en arrêt au poste de retournement ou bien une paire de vés de supports vides ou bien un tuyau qui n'est pas à retourner car le tuyau à retourner (à raison d'un sur deux) est soit un pas à l'amont soit un pas à l'aval du poste de retournement. En d'autres termes, la probabilité est grande que le retourneur soit dans l'impossibilité de retourner un tuyau sur deux puisque l'avance est de deux pas. Le document DE-A-1 928 696 décrit la confection de lits de tuyaux à emboîtement et leur mise en paquets. Toutefois, les tuyaux sont présentés un par un, et déjà tête-bêche. Il ne décrit donc pas de dispositif de retournement.

Le problème est donc de saisir au poste de retournement un tuyau sur deux malgré l'avance de deux pas à la fois et l'irrégularité de remplissage du transporteur de tuyaux qui fait que le tuyau à retourner ne se présente pas toujours à une distance de deux pas ou d'un multiple de deux pas du poste de retournement mais au contraire souvent à une distance d'un pas ou d'un nombre impair de pas dudit poste.

L'invention a pour objet un procédé de retournement de tuyaux qui résout ce problème et qui est caractérisé par l'opération de déplacement du retourneur en translation parallèle au transporteur, d'une distance d'un pas dans un sens ou dans l'autre, en cas de nécessité, alors que les chaînes du transporteur se déplacent de deux pas entre deux arrêts consécutifs ainsi que cela ressort de la revendication 1.

L'invention a également pour objet un dispositif de retournement de tuyaux pour la mise en œuvre de ce procédé, ce dispositif étant caractérisé en ce que le retourneur est monté sur un chariot baladeur en translation parallèle aux chaînes sans fin du transporteur de tuyaux sur une course alternative d'un pas ainsi que cela ressort de la revendication 4.

Grâce à cet agencement, le poste de retournement de tuyaux est mobile d'un pas dans l'un ou dans l'autre sens de sorte qu'en cas de besoin, c'est-à-dire si le tuyau à retourner s'arrête à une distance d'un pas du retourneur, le retourneur se déplace d'un pas pour appréhender le tuyau et le retourner. L'invention présente donc l'avantage de maintenir la cadence rapide de progression du transporteur par courses de deux pas à la fois, sans être obligé de modifier ces courses pour les ramener à un pas seulement en cas d'irrégularité de positionnement du tuyau à retourner, ce qui serait une solution évidente mais compliquée et cause de ralentissement.

De préférence, le déplacement d'un pas du retourneur, sous la nappe de tuyaux transportés, s'effectue pendant l'avance des chaînes du transporteur.

Le problème est également de retourner rapidement le tuyau pendant un arrêt du transporteur horizontal, avec un mécanisme de transmission aussi simple et peu encombrant que possible entre un arbre menant actionné par un groupe motoréducteur suivant un arc de rotation de 180° et un arbre mené solidaire du retourneur proprement dit.

Ce problème est résolu suivant l'invention par un dispositif caractérisé en ce que, entre l'arbre menant entraîné par un groupe motoréducteur, et l'arbre mené de retournement d'un tuyau de 180°, est interposé un mécanisme de transmission à système plan articulé dit « à trois barres » comprenant deux manivelles inégales réunies par une bielle et coopérant avec un couple d'engrenages droits en prise de diamètres différents, le plus gros engrenage étant solidaire en rotation de la plus grande manivelle, tandis que la plus petite manivelle est solidaire en rotation de l'arbre menant, le plus petit engrenage étant solidaire en rotation du retourneur proprement dit.

Ce mécanisme de transmission présente les avantages de retourner très rapidement un tuyau de 180° simplement posé sur un support en gouttière et notamment.

1) par le système « trois barres » d'obtenir une accélération et une décélération très douces supprimant ainsi tout choc susceptible d'éjecter le tuyau hors de son support

2) par le couple d'engrenages, de rétablir la vitesse nécessaire au retournement (multiplication) alors qu'elle avait été réduite par le système « trois barres ».

D'autres caractéristiques apparaîtront au cours de la description qui va suivre.

Au dessin annexé donné seulement à titre d'exemple,

la Figure 1 est une vue en perspective d'un paquet de tuyaux à obtenir, avec disposition tête-bêche des emboîtements et bouts unis ;

la Figure 1A est une vue schématique en plan, à petite échelle, d'un lit de tuyaux tête-bêche et décalés les uns par rapport aux autres ;

la Figure 2 est une vue schématique en élévation, à petite échelle, d'un transporteur de tuyaux équipé d'un retourneur de tuyaux ;

la Figure 3 est une vue schématique en élévation d'un retourneur de tuyaux, en position basse par rapport au transporteur, à plus grande échelle que la Fig. 2 ;

la Figure 4 est une vue analogue à la Fig. 3 du retourneur en position haute par rapport au transporteur avant retournement ;

la Figure 4A est une vue partielle d'un tuyau retourné de 180° par rapport à la position sur la Fig. 4 ;

la Figure 5 est une vue schématique de dessus du retourneur avant rotation ;

la Figure 6 est une vue correspondant à la Fig. 5 du retourneur en cours de rotation, c'est-à-dire de retournement d'un tuyau ;

la Figure 7 est une vue en plan correspondant aux Fig. 5 et 6 du retourneur après rotation, c'est-à-dire retournement de 180°, d'un tuyau ;

la Figure 8 est une vue schématique partielle du retourneur en coupe suivant la ligne 8-8 de la Fig. 5, en fin de translation d'un pas suivant la direction d'avance du transporteur, et en position basse par rapport au transporteur partiellement représenté, le retourneur étant en position précédant le retournement d'un tuyau ;

la Figure 9 est une vue correspondant à la Fig. 8 du retourneur en position haute au-dessus du transporteur et de la nappe de tuyaux transportés après retournement de 180° d'un tuyau ;

les Figures 10 à 13 sont des vues schématiques illustrant les positions successives et relatives du transporteur de tuyaux et du retourneur évoluant en translation entre deux positions distantes d'un pas en vue de retourner un tuyau sur deux, pour confectionner des lits impairs de tuyaux ;

les Figures 14 à 16 sont des vues analogues aux Fig. 10 à 13, pour illustrer la confection de lits pairs de tuyaux.

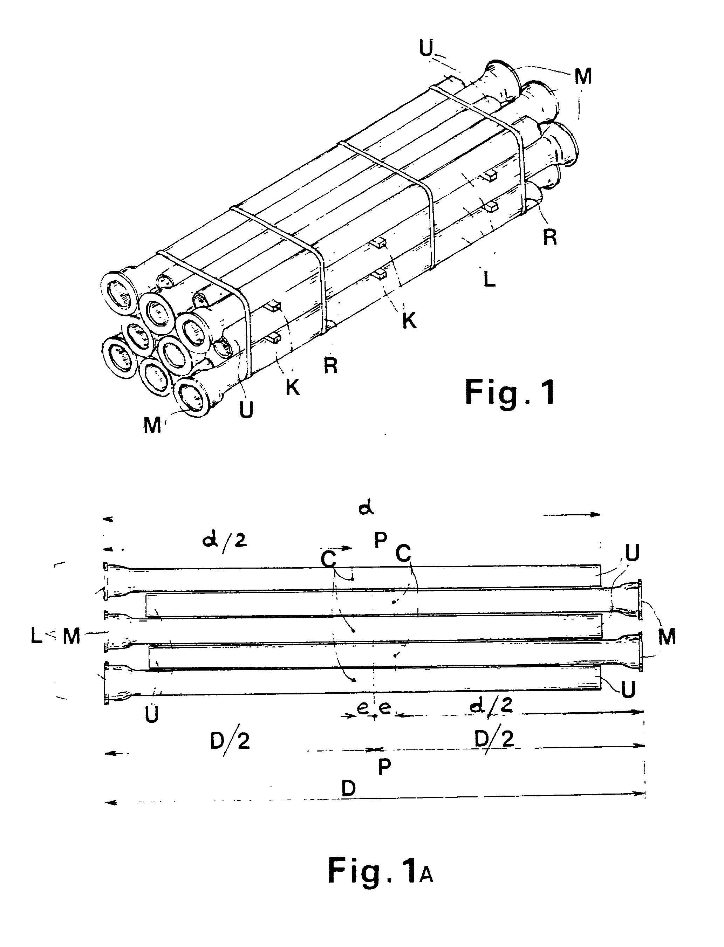

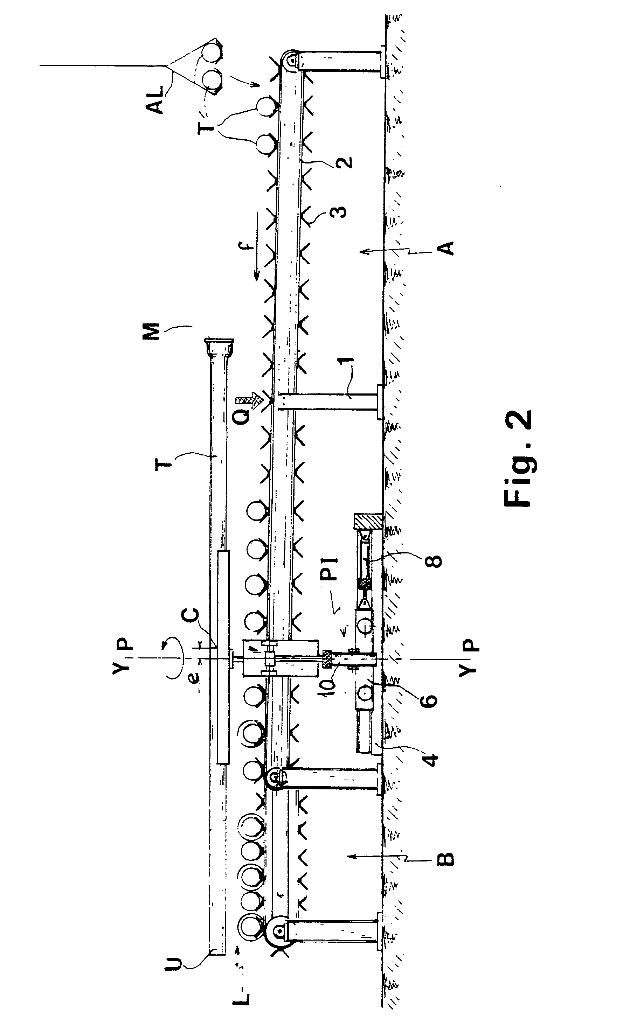

Description générale de l'installation (Fig. 1, 1A et 2)

Suivant l'exemple d'exécution, l'installation de l'invention est appliquée à la confection de paquets de tuyaux T en fonte, à emboîtements, liés par des liens ou rubans R métalliques ou plastiques.

Comme connu, les tuyaux sont disposés en lits superposés L constituant un empilage ou un paquet. Horizontalement sur chaque lit L et verticalement entre deux lits superposés, ils sont disposés tête-bêche, un emboîtement M d'un tuyau alternant avec un bout uni U d'un tuyau voisin afin de réduire l'encombrement de chaque paquet. A cet effet (Fig. 1A), les cinq tuyaux identiques T1 à T5 d'un lit L sont décalés longitudinalement les uns par rapport aux autres, d'une longueur correspondant au minimum à celle de leur emboîtement M. Il en résulte que si d est la longueur totale de chaque tuyau, si l'on désigne par C le milieu de cette longueur d, la longueur totale D d'un lit L ou d'un paquet est égale à la longueur d d'un tuyau augmentée d'au moins la longueur d'un emboîtement M et que le milieu C de chaque tuyau est décalé soit à droite soit à gauche d'une distance e (excentrement) par rapport à la médiane P-P en trait mixte de la longueur totale D du lit ou paquet. La médiane P-P est aussi la trace d'un plan de symétrie P-P d'un lit ou paquet. Comme les paquets de tuyaux à confectionner doivent conserver des dimensions et poids compatibles avec les possibilités des engins et véhicules de manutention, il s'agit plus particulièrement de tuyaux T de petits diamètres, allant par exemple de 60 à 300 mm, ou à la rigueur de moyens diamètres allant par exemple jusqu'à 600 mm, les tuyaux d'un même paquet ayant en tout cas le même diamètre. Chaque paquet est composé d'un nombre pair ou impair de lits L de tuyaux T. Chaque lit comprend un nombre pair ou impair de tuyaux T.

Dans l'exemple de la Fig. 1, il y a trois lits superposés de cinq tuyaux dont le diamètre est par exemple de 80 mm ou de 100 mm. Entre deux lits superposés sont interposées des cales de bois K en vue de parfaire l'immobilisation des lits à l'intérieur de chaque paquet. Les cales K sont disposées tranversalement par rapport à la longueur du tuyau T qui est par exemple de l'orde de 6 m.

Sur les figures suivantes, dans un but de simplification, les extrémités de tuyaux à emboîtements M sont représentées en vue en bout par deux cercles concentriques alors que les extrémités à bout uni U sont représentées par un seul cercle de plus petit diamètre que le cercle extérieur d'emboîtement M.

On peut avoir un nombre pair de lits superposés, par exemple deux ou quatre lits, ou bien un nombre impair, par exemple trois, comme sur la Fig. 1. Dans chaque lit, on peut avoir un nombre pair de tuyaux, par exemple deux, quatre ou six, ou bien un nombre impair de tuyaux, par exemple trois ou cinq. Que les lits soient composés d'un nombre pair ou impair de tuyaux ou bien que le nombre de lits soit pair ou impair, on a toujours la disposition tête-bêche horizontalement sur chaque lit et verticalement entre lits superposés :

Extrémités de lits impairs :

M — U — M — U — M
U — M — U — M — U
M — U — M — U — M

Extrémités des lits pairs :

M — U — M — U
U — M — U — M
M — U — M — U

L'installation dans laquelle se situe le dispositif de retournement de tuyaux de l'invention comporte les éléments suivants représentés sommairement à la Fig. 2 :

Un transporteur horizontal ou à peu près horizontal A de tuyaux suivant une direction d'avance marquée par une flèche f perpendiculaire aux tuyaux T disposés sur le transporteur A à intervalles réguliers ou pas p, parallèlement entre eux, c'est-à-dire à leurs fûts.

En appelant amont l'origine de la flèche f et aval la pointe de cette flèche, à l'extrémité amont du transporteur A, les tuyaux T sont amenés par paires, par tout moyen connu, par exemple par un appareil de levage AL. Les tuyaux T provenant d'un atelier de centrifugation à machines jumelées arrivent à l'amont du transporteur A avec la même orientation de leurs extrémités, c'est-à-dire en présentant d'un même côté leur emboîtement M et de l'autre côté leur bout uni U. Ici l'on voit les bouts unis U.

A l'aval du transporteur A fait suite un transporteur analogue B de confection de lits L de tuyaux, les tuyaux étant disposés tête-bêche à intervalles ou pas plus rapprochés que sur le transporteur A.

Près de l'extrémité aval du transporteur A, est disposé le retourneur PI de l'invention. Le retourneur ou dispositif de retournement PI de tuyaux de l'invention consiste essentiellement en un chariot ou baladeur à mouvement de va-et-vient en translation suivant une course égale à un pas d'intervalle entre tuyaux sur le transporteur A, ledit chariot étant pourvu de moyens d'élévation et de retournement d'un tuyau.

On a vu que le transporteur B était celui des lits confectionnés. Le transporteur A est celui de présentation tête-bêche, la disposition tête-bêche étant obtenue à l'aval du dispositif de retournement PI sur le transporteur A alors qu'à l'amont du transporteur A les tuyaux ont tous la même orientation de leur bout uni U. C'est sur leur emboîtement qu'ils sont alignés. Le passage du transporteur A au transporteur B s'effectue par des moyens de manutention connus, et non représentés, par exemple par un appareil de levage prélevant les tuyaux un à un sur le transporteur A pour les déposer sur le transporteur B dans le même ordre.

En bref, sur la série de tuyaux T se présentant à l'amont du dispositif de retournement PI de l'invention, un tuyau sur deux doit être retourné de 180 ° pour obtenir la présentation tête-bêche. Cette présentation est obtenue à l'aval du dispositif de retournement PI en soulevant un tuyau au-dessus du transporteur A, en le retournant de 180° au-dessus du transporteur A, et en le redéposant sur le transporteur A. L'opération de retournement s'effectue pendant un arrêt entre deux courses du transporteur A qui avance de deux pas par périodes ou courses régulières séparées par des arrêts réguliers. On verra plus loin que, en raison de l'absence de tuyaux sur le transporteur A, à certains endroits, le baladeur résout le problème de présenter le dispositif de retournement PI là où se trouve un tuyau à retourner.

Description détaillée (Fig. 2, 3, 5, 8)

Le transporteur A (Fig. 2-8) comporte un bâti 1 porteur d'une paire de chaînes sans fin 2 elles-mêmes portant des vés ou berceaux 3 de support de tuyaux T régulièrement espacés d'un pas p. Les chaînes sans fin 2 sont entraînées en mouvement d'avance intermittente suivant la direction de la flèche f, par un groupe motoréducteur non représenté. Les mouvements d'avance intermittente, séparés régulièrement par des arrêts, ont une course égale à deux pas (= 2 p) pour faire avancer deux tuyaux à la fois.

Les tuyaux T sont posés par paires sur les vés 3 transversalement aux chaînes 2, donc à la direction d'avance f.

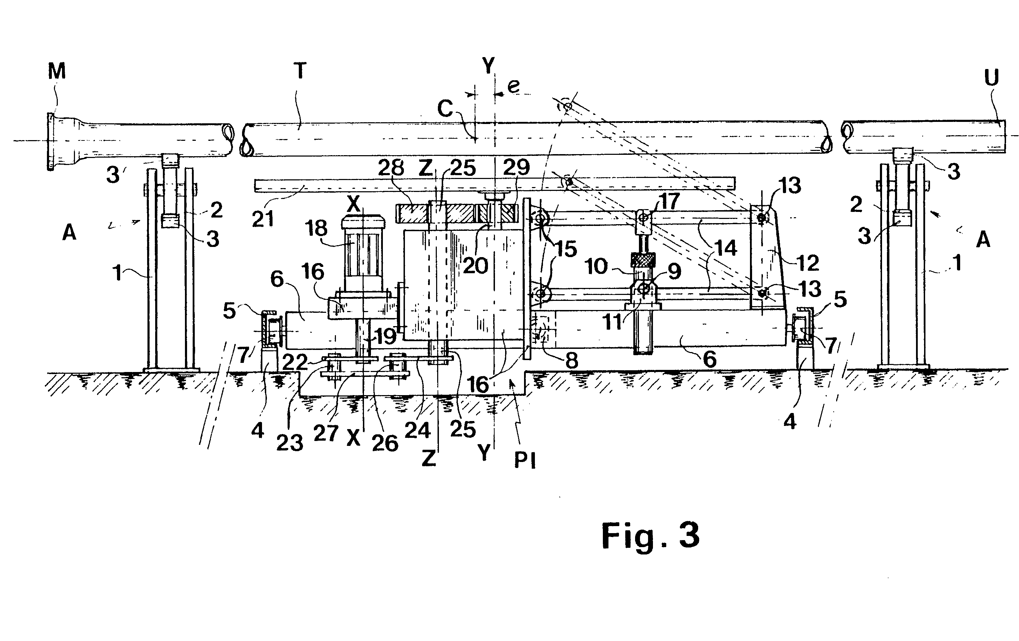

Le dispositif de retournement (Fig. 3, 5, 8) de l'invention ou en abrégé retourneur PI est monté sur un bâti 4 à chemin de roulement 5 constitué d'une paire de guides profilés parallèles aux chaînes 2 et à la direction f.

Sur le bâti 4 est monté, conformément à l'invention, un chariot ou baladeur 6 consistant en un châssis métallique rectangulaire à galets de roulement 7. Le baladeur 6 est susceptible d'une course alternative égale à un pas p d'espacement des vés 3 sur les chaînes 2, sous l'action d'un vérin à fluide sous pression 8 porté par le bâti 4 et attaché au châssis du baladeur 6.

Le baladeur 6 porte le mécanisme du retourneur PI, à savoir :

des moyens d'élévation d'un tuyau au-dessus du transporteur A et des tuyaux transportés (Fig. 2) ;

des moyens de retournement d'un tuyau de 180° dans un plan horizontal.

Moyens d'élévation (Fig. 3-5)

Sur le châssis du baladeur 6 est articulé autour d'un tourillon 9 d'axe horizontal un vérin élévateur 10 à fluide sous pression, d'axe vertical ou à peu près. Le tourillon 9 est porté par une paire d'oreilles 11 fixées au baladeur 6. L'orientation de l'axe du tourillon 9 est sans importance.

Le baladeur 6 porte une paire de montants 12 sur lesquels sont articulées en deux tourillons 13 espacés en hauteur et d'axes parallèles à la direction f les extrémités de deux paires de bras élévateurs 14 parallèles entre eux, portant à leur autre extrémité par des articulations 15 un châssis 16 contenant le mécanisme de retournement. Les bras élévateurs 14, les tourillons 13 et les articulations 15 sur le châssis 16 constituent un parallélogramme articulé.

Vers le milieu des bras élévateurs supérieurs 14 est attachée par une articulation 17 l'extrémité de la tige de piston du vérin élévateur 10. On verra plus loin quelles sont les deux positions basse et haute d'un tuyau T obtenues par les moyens d'élévation.

Moyens de retournement de l'invention (Fig. 3-5)

Le châssis 16 porte un mécanisme de retournement de 180° d'un tuyau T dans un plan horizontal. Le châssis 16 porte un groupe motoréducteur 18 pour l'entraînement en rotation d'un arbre menant 19 d'axe vertical XX, un arbre mené 20 d'axe vertical YY portant une gouttière horizontale 21 à section en vé, de longueur inférieure à celle d'un tuyau T, destinée à recevoir un tuyau T à retourner autour de l'axe YY, et, entre les arbres 19 et 20, une transmission de mouvements destinée à transformer un mouvement moteur de rotation continue de l'arbre 19 en mouvement mené de rotation alternative de 180° de l'arbre mené 20. Le tuyau T est simplement posé sur la gouttière 21 (avec décalement e de son milieu C par rapport à l'axe YY) sans fixation sur la gouttière 21.

La transmission de mouvements comporte un système de transformation de mouvements et un système d'augmentation de vitesse donc de course en un temps donné.

La transformation de mouvements est obtenue par une timonerie appelée en cinématique « système articulé à trois barres » comprenant une première manivelle 22 calée sur l'arbre menant 19 dont elle est solidaire en rotation et portant à son extrémité un tourillon 23, une deuxième manivelle 24 plus longue que la première et coudée, calée sur un arbre intermédiaire 25 d'axe ZZ parallèle aux axes XX et YY et solidaire en rotation de celui-ci, et portant à son extrémité un tourillon 26, et, articulée entre les tourillons 23 et 26, une bielle de liaison 27 des manivelles 22 et 24.

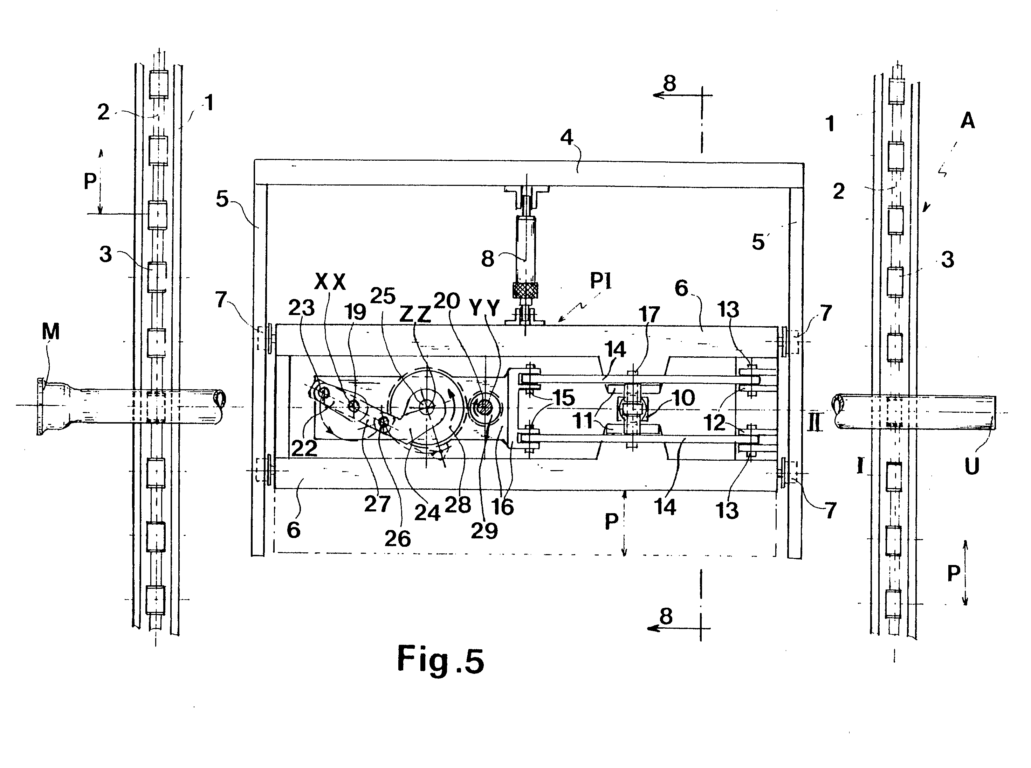

Par ce système à trois barres articulées 22, 24, 27, pour une rotation de la première manivelle 22 d'un arc de 180°, au cours d'une rotation continue, la deuxième manivelle 24 tourne d'un arc de 90° compte tenu du rapport des longueurs géométriques des manivelles, c'est-à-dire des entraxes 19-23 et 25-26 (les arcs sont en trait mixte à la Fig. 5).

L'augmentation de vitesse, donc de course, entre l'arbre intermédiaire 25 et l'arbre mené 20 est obtenue par un couple d'engrenages droits toujours en prise 28 et 29 calés respectivement sur les arbres 25 et 20, et comprenant une grande roue dentée 28 et une petite roue dentée 29, par exemple dans un rapport de diamètres 1/2 afin d'obtenir pour la petite roue 29, donc pour le vé 21 de retournement d'un tuyau, une vitesse double de celle de la grande roue 28, c'est-à-dire, dans le même temps, une course double de celle de la deuxième manivelle 24, donc une course suivant un arc de 180° pour une course de la manivelle 24 suivant un arc de 90°. Les sens de rotation des manivelles 22 et 24 et des roues dentées 28 et 29 sont indiqués par des flèches.

Le châssis 16 porte les arbres 19, 20 et 25 ainsi, par conséquent, que le système trois barres 22, 24, 27 et les roues dentées 28, 29. L'axe YY de l'arbre mené 20 est l'axe de retournement d'un tuyau T. L'axe YY passe par le milieu de la longueur de la gouttière 21 qui est situé lui-même dans le plan de symétrie P-P d'un lit ou d'un paquet. Par contre, par le moyen d'un dispositif d'alignement des emboîtements (connu et non représenté) à l'amont du retourneur PI, le milieu C d'un tuyau T placé sur la gouttière 21 n'est pas situé dans l'axe YY, c'est-à-dire dans le plan de symétrie P-P d'un lit ou paquet (plan P-P contenant l'axe YY) mais décalé d'un excentrement e par rapport à l'axe YY.

Par les moyens d'élévation, la gouttière 21 de support d'un tuyau est susceptible d'occuper une position basse d'attente en-dessous du transporteur A (Fig. 3) et une position haute de retournement au-dessus du transporteur A (Fig. 2, 4 et 9) et surtout au-dessus de la nappe de tuyaux T transportés afin de ne pas heurter celle-ci au cours du retournement de 180°.

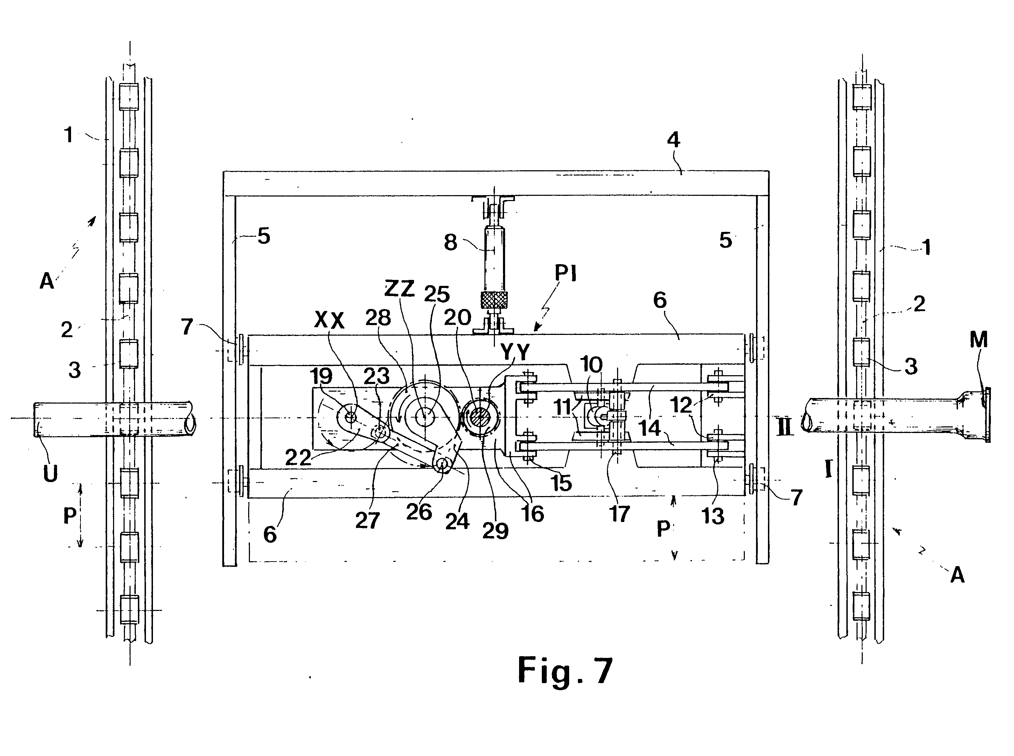

Après retournement de 180° d'un tuyau T dans un plan horizontal, l'emboîtement M du tuyau, qui se trouvait par exemple à gauche de la figure (Fig. 3, 4, 5), se trouve placé à droite de la figure (Fig. 7).

Fonctionnement

Soit à préparer sur le transporteur A, en position tête-bêche, des tuyaux T à transférer sur le transporteur B où un lit de tuyaux à empaqueter est formé.

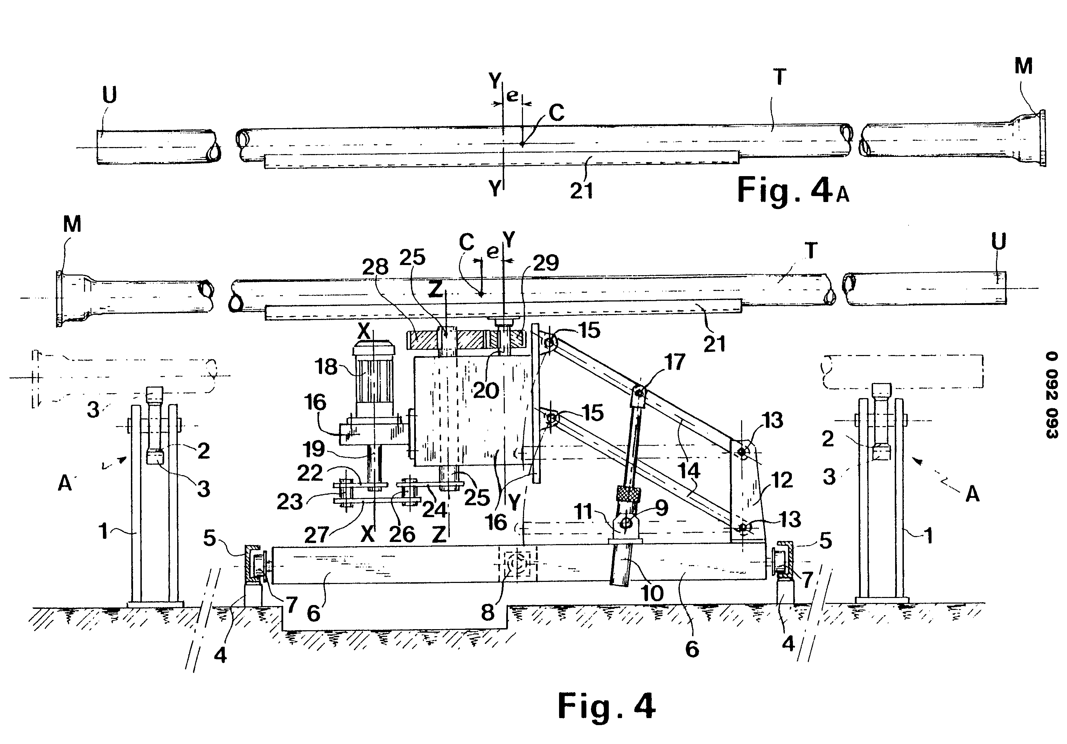

Une paire de tuyaux T est amenée sur le transporteur A à l'arrêt (Fig. 2, à droite), par exemple par un appareil de levage AL. Deux tuyaux T sont déposés sur deux vés 3 consécutifs avec leurs emboîtements et leurs bouts unis orientés du même côté, c'est-à-dire par exemple les bouts unis au premier plan pour un observateur regardant les Fig. 2, 8 et 9 ou bien à droite des Fig. 3 et 4. Avançant périodiquement de deux pas p, c'est-à-dire de deux intervalles entre vés 3 consécutifs, avec arrêts intermédiaires entre deux avances successives, le transporteur A fait progresser les tuyaux T jusqu'au poste de retournement ou retourneur PI où un tuyau sur deux doit être retourné de 180° pendant un arrêt du transporteur A.

De nouvelles paires de tuyaux fabriqués sont ainsi déposées continuellement sur le transporteur A et en remplissent les vés qui les reçoivent.

Cependant, sur le transporteur A, entre l'extrémité amont d'amenée de tuyaux T (à droite de la Fig. 2) et le poste de retournement PI, se trouve un poste Q de contrôle de qualité symbolisé par une flèche verticale dirigée vers le bas sur la Fig. 2. Au poste Q, les tuyaux sont examinés et, en cas de nécessité, sont retirés purement et simplement du transporteur A pour être retouchés ou mis au rebut. Il en résulte, en aval du poste Q, des absences de tuyaux et par conséquent des vés 3 vides, répartis au hasard, qui vont se présenter au poste de retournement PI.

On va décrire successivement (changements de position illustrés en trait mixte) :

une opération de retournement de 180° d'un tuyau en supposant que le tuyau à retourner se trouve bien placé au poste de retournement PI, c'est-à-dire juste au-dessus de la gouttière 21 de support appartenant au retourneur PI (ce qui n'est pas toujours le cas, à la suite des opérations de contrôle de qualité et de retraits de tuyaux qui viennent d'être évoquées) ;

une opération de translation d'un pas p du retourneur PI pour placer sa gouttière de support 21 juste au-dessous d'un tuyau T à retourner, lorsque la gouttière 21 se trouvait au-dessous d'un tuyau qui n'était pas à retourner (le précédent l'ayant été) ou bien au-dessous d'une paire de vés 3 vides.

Retournement de 180° (Fig. 3, 4, 4A, 5, 6, 7)

Un tuyau T vient de s'arrêter au-dessus de la gouttière 21 qui est au point bas du fait que le vérin de levage 10 est au point bas (Fig. 3 — position en trait plein des bras élévateurs 14). Le groupe motoréducteur 18 est à l'arrêt. Le vérin 10 est alimenté en fluide sous pression pour amener les bras 14 en position haute (en trait mixte à la Fig. 3 et en trait plein à la Fig. 4).

Au cours de la levée de la gouttière 21, parallèlement à elle-même, c'est-à-dire transversalement à la direction f, le tuyau T est soulevé par la gouttière 21 au-dessus du transporteur A et, surtout, au-dessus de la nappe de tuyaux transportés.

En position haute du tuyau T, s'effectue le retournement de 180° dans le plan horizontal de rotation de la gouttière 21, de la manière suivante (Fig. 5, 6 et 7).

a) Avant rotation (Fig. 5) : Les manivelles 22 et 24 ainsi que la bielle 27 sont dans le prolongement les unes des autres (alignement des tourillons 23, 26 et de l'arbre 19 en vue en plan. On peut les appeler aussi pivots : les pivots 23, 26 sont de part et d'autre du pivot 19).

Le groupe motoréducteur 18 est mis en marche.

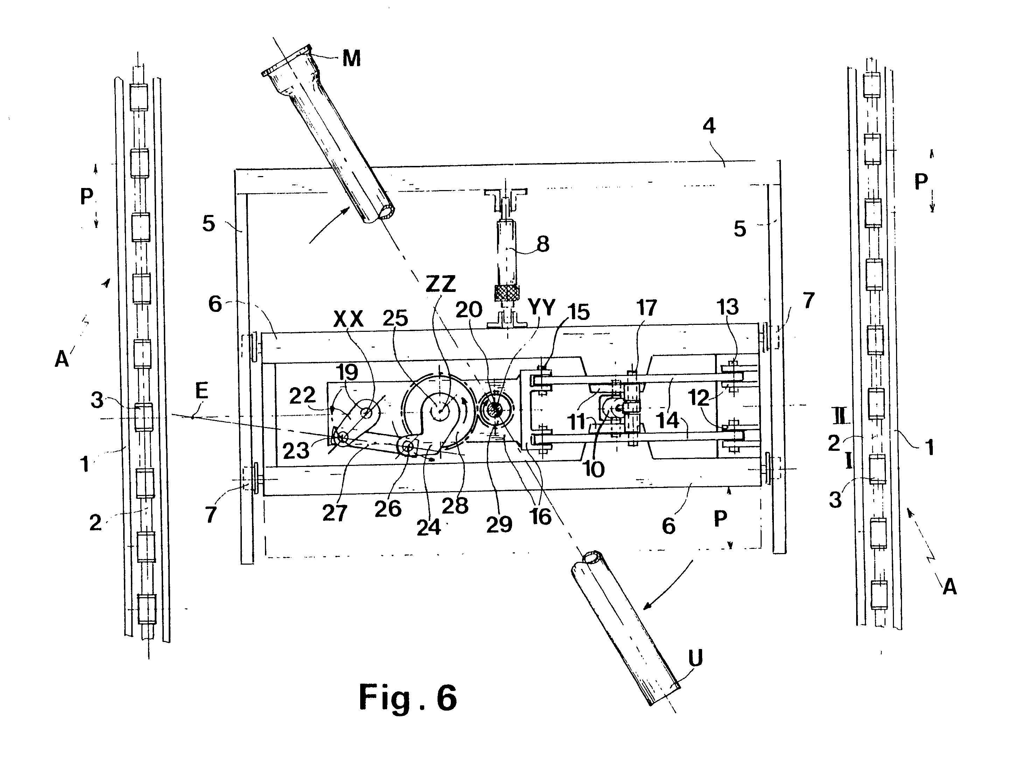

b) En cours de rotation (Fig. 6) l'arbre 19, entraîné en rotation fait tourner la première manivelle 22 motrice de sorte que le tourillon 23 parcourt une trajectoire en arc de cercle représentée en trait mixte. La bielle de liaison 27 entraîne à son tour le tourillon 26 et la manivelle menée 24. Les tourillons 23, 26 et les arbres 19 et 25 des deux manivelles 22, 24 et de la bielle de liaison 27 forment en vue en plan les sommets ou pivots d'un quadrilatère articulé dont les manivelles 22, 24 et la bielle 27 constituent un ensemble cinématique appelé « trois barres ». Le tourillon 26 de la manivelle menée 24 a une trajectoire en arc de cercle représentée en trait mixte. L'arbre 25 mené fait tourner la grande roue dentée 28 qui à son tour fait tourner la petite roue dentée 29 en sens inverse et par conséquent l'arbre 20, la gouttière 21 et le tuyau T (sens de rotation indiqués par des flèches).

Le rapport des vitesses angulaires des pivots ou arbres 19 et 25 étant égal à l'inverse du rapport des distances respectives des pivots 19 et 25 à un point E (Fig. 6) défini par l'intersection des segments en trait mixte joignant les pivots 19, 25, d'une part, et 23, 26, d'autre part, les dimensions des manivelles 22-24 et de la bielle 27 sont telles que la manivelle menée 24 tourne deux fois moins vite que la manivelle motrice 22. Le rapport des vitesses de rotation des roues dentées 28 et 29 étant inverse de celui de leurs diamètres, le diamètre de la roue 28 étant le double de celui de la roue 29, cette dernière tourne deux fois plus vite que la roue 28. La cinématique du système « trois barres » (manivelles 22-24 et bielle 27) assure avantageusement une accélération en début de rotation et une décélération en fin de rotation, d'où une progressivité dans la mise en route initiale et le ralentissement final qui évite de soumettre à des secousses le tuyau T posé sur la gouttière 21.

c) En fin de rotation (Fig. 7), c'est-à-dire après que le tourillon 23 de la manivelle motrice ait parcouru un demi-cercle, le groupe motoréducteur 18 s'arrête. Les deux manivelles 22 et 24 et la bielle de liaison 27 sont à nouveau en prolongement (alignement des pivots 19, 23, 26 du système « trois barres », les pivots 23 et 26 étant d'un même côté par rapport au pivot 19). La manivelle motrice 22 ayant effectué une demi-révolution (180°), la manivelle menée 24 n'a effectué qu'un quart de révolution (90°). En d'autres termes, la trajectoire complète du pivot 23 est d'un demi-cercle et celle du pivot 26 d'un quart de cercle. La roue dentée 28 a tourné de 90° mais, dans le même temps, la roue dentée 29 a tourné de 180°. En comparant les Fig. 5 et 7, on voit que l'emboîtement M du tuyau T, qui se trouvait initialement à gauche, se trouve finalement à droite de la vue en plan.

Descente du tuyau T retourné

Le vérin 10 est actionné de manière à ramener les bras élévateurs 14 de la position mixte à la Fig. 3 à la position en trait plein à la Fig. 3. L'ensemble du châssis 16 descend avec la gouttière 21 et le tuyau T qui est redéposé sur les vés 3 qu'il avait quittés.

Après retournement du tuyau T, le transporteur A est remis en marche et effectue une avance de deux pas en direction du transporteur B, puis s'arrête pour le retournement d'un autre tuyau.

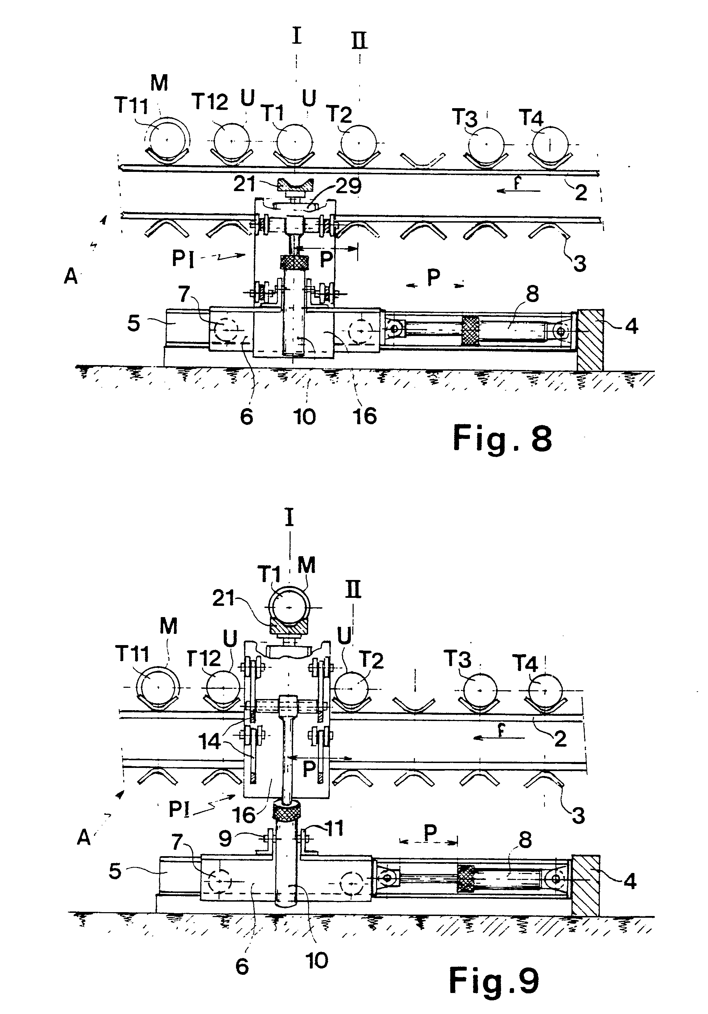

La transmission « trois barres » évite de faire subir des secousses au tuyau en retournement et, en raison de son faible encombrement, se loge facilement dans un passage entre deux tuyaux posés sur le transporteur A de part et d'autre du retourneur PI (Fig. 9). Le couple d'engrenages 28-29 rétablit la vitesse de retournement nécessaire, après sa réduction par le système « trois barres ».

Translation d'un pas p du retourneur PI (Fig. 8, 9 et 10 à 16) (entre positions I et II)

On a supposé plus haut qu'un tuyau T à retourner se trouvait effectivement placé juste au-dessus du retourneur PI lors d'un arrêt du transporteur A.

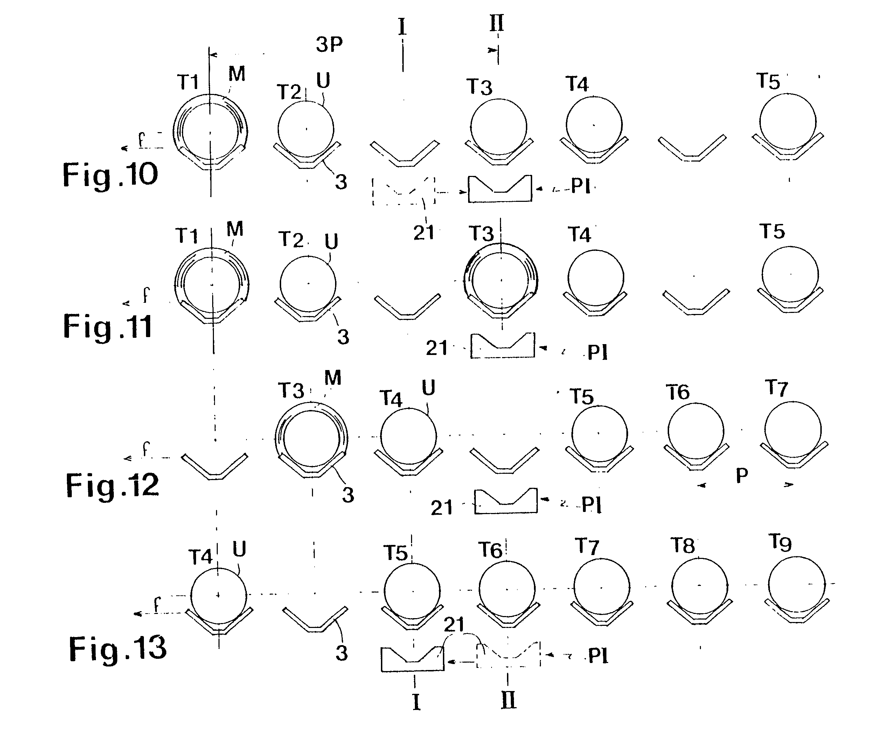

Or, on a vu plus haut également que ce n'était pas toujours le cas du fait de l'enlèvement de certains tuyaux T au poste de contrôle Q (Fig. 2) lorsqu'ils présentaient des défauts. Il en résulte que les intervalles entre tuyaux à retourner (il faut retourner un tuyau sur deux qui passent devant le retourneur PI) peuvent être d'un nombre de pas impair alors que l'avance du transporteur A est de deux pas. Aux Fig. 8 et 9 sont illustrés en élévation le retourneur PI et une partie du transporteur A portant une série de tuyaux T11-T12 disposés tête-bêche à l'aval du retourneur PI et T1 à T4 sur le retourneur PI et à l'amont de celui-ci, avec un vide entre les tuyaux T2 et T3. Le tuyau T1 à retourner à la suite du tuyau T12 se trouve encore au-dessus du retourneur PI et est par conséquent retourné à la Fig. 9 sans mouvement du vérin 8 donc sans déplacement du retourneur PI. Les figures schématiques 10 à 13 illustrent un certain nombre de vés 3 et de tuyaux ainsi que le retourneur PI représenté uniquement par sa gouttière 21, ainsi que le déroulement des opérations de va-et-vient du retourneur PI suivant l'emplacement du tuyau à retourner, pour la confection d'abord d'un lit impair de tuyaux (nombre impair) (Fig. 10 à 13), puis de lits pairs consécutifs.

Lit impair

Fig. 10 : Le transporteur A a avancé de deux pas par rapport à la Fig. 9. Les tuyaux T1 et T2 sont passés en position tête-bêche à l'aval du retourneur PI. Comme le vé 3 qui était vide entre les tuyaux T2 et T3 devait se trouver au-dessus du retourneur PI s'il était resté en position I alors que c'est le tuyau T3 qu'il faut retourner, le retourneur PI a été déplacé de la position I à la position II pendant l'avance du transporteur A (ancienne position : en trait interrompu — nouvelle position : en trait plein). Ainsi, le tuyau T3 qui est à un intervalle de trois pas du précédent tuyau retourné T1 et à un pas de l'ancienne position du retourneur PI se trouve juste au-dessus de la nouvelle position du retourneur PI. On comprend que, si le retourneur PI n'avait pas été déplacé en translation, le tuyau T3 ne serait pas venu au-dessus du retourneur PI lors de l'avance suivante de deux pas du transporteur A, mais se serait placé à un pas à l'aval du retourneur PI (ancienne position).

Fig. 11 : Après retournement du tuyau T3 en positon II, le prochain tuyau à retourner est T5, distant de trois pas de la position II.

Fig. 12 : Après une avance de deux pas, le tuyau T5 n'est plus qu'à un pas de la position II où se trouve le retourneur PI.

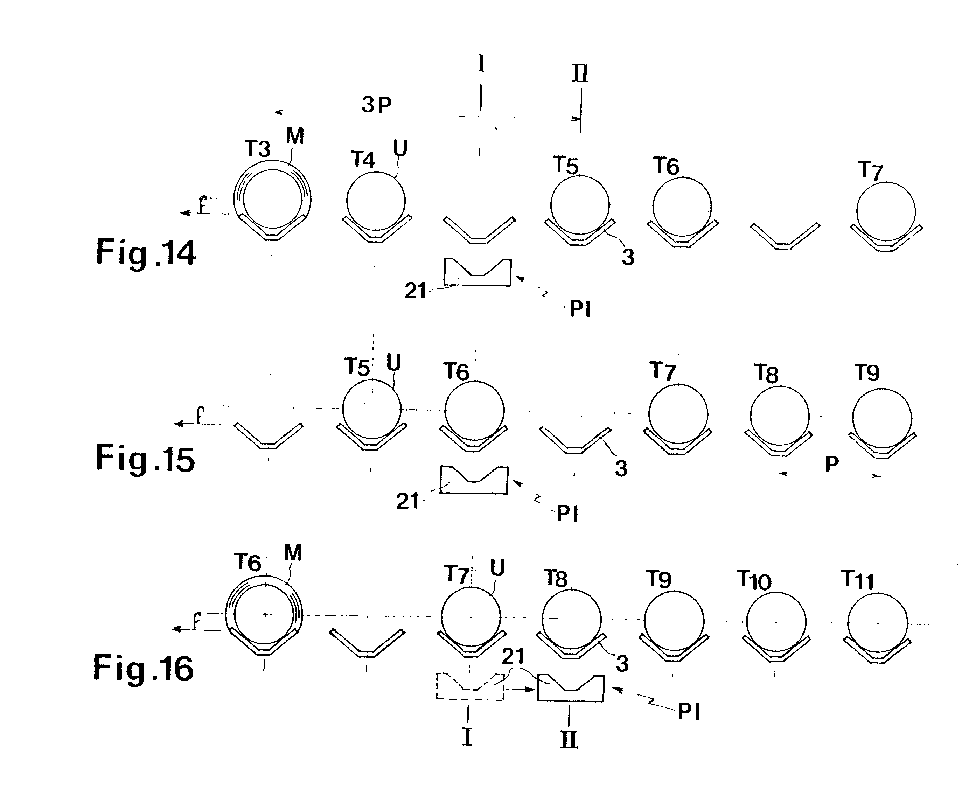

Fig. 13 : Après une nouvelle avance de deux pas, et, simultanément, une avance d'un pas du retourneur PI de la position II à la position I, le tuyau T5 est au-dessus du retourneur PI.

Pour confectionner un paquet de lits impairs (Fig. 1 et 1A) (par exemple : trois lits de cinq tuyaux), on a vu que les tuyaux tête-bêche, à extrémités décalées, étaient amenés par le retourneur PI dans l'ordre suivant des extrémités à emboîtement M et bout uni U :

M — U — M — U — M
U — M — U — M — U
M — U — M — U — M

ce qui montre que la loi de retournement d'un tuyau sur deux est appliquée.

Il n'en est pas toujours de même pour confectionner un paquet de lits pairs (par exemple trois lits de quatre tuyaux) dont les extrémités sont à disposer ainsi :

M — U — M — U
U — M — U — M
M — U — M — U

Confection de lits pairs successifs (Fig. 14 à 16)

On remarque que le dernier tuyau d'un lit supérieur a la même disposition que le premier tuyau du lit suivant et que, par conséquent, le premier tuyau du lit suivant n'est pas à retourner. Le déroulement des opérations pour trois lits de quatre tuyaux numérotés de T1 à T2 est donc le suivant :

Fig. 14 : Le dernier tuyau T4 du premier lit vient de passer en aval du retourneur PI supposé en position I. Le premier tuyau T5 du lit suivant est à un pas du retourneur PI et à trois pas du précédent tuyau T3 retourné. Mais T5 n'est pas à retourner.

Fig. 15 : Après une avance de deux pas du transporteur, le tuyau T5 passe à l'aval du retourneur PI tandis que le tuyau suivant T6 à retourner se place en position I au-dessus du retourneur PI qui va faire son office pendant l'arrêt du transporteur A. Le prochain tuyau à retourner n'est pas T7 mais T8 qui est à trois pas de la position I.

Fig. 16 : Après avance de deux pas du transporteur A et déplacement simultané d'un pas du retourneur PI de la position I à la position II, le tuyau T8 à retourner se trouve au-dessus du retourneur PI.

On voit donc que, sauf pour les tuyaux T5 et T9, la loi de retournement d'un tuyau sur deux est suivie.

Comme on le voit, non seulement la mobilité du retourneur PI en va-et-vient entre les positions I et II permet de prendre les tuyaux à retourner quelle que soit leur position I ou II compte tenu de l'avance du transporteur A de deux pas à la fois, mais encore que son déplacement en translation a lieu pendant l'avance des chaînes du transporteur A, ce qui fait gagner du temps.

Bien entendu, le déplacement du retourneur PI entre les positions I et II pourrait aussi avoir lieu pendant un arrêt des chaînes du transporteur A, mais ce serait moins avantageux.

Enfin, que les lits soient pairs ou impairs, le décalage des tuyaux en lits et paquets (Fig. 1A) est obtenu aisément par simple retournement d'un tuyau du fait de l'excentrement e de son milieu C par rapport à l'axe de retournement YY qui est situé dans le plan de symétrie P-P (milieu) d'un lit ou paquet. Ceci économise un dispositif de décalement ou de ripage longitudinal d'un tuyau sur deux, à l'aval du retourneur PI.

## Revendications

1. Procédé de manutention de tuyaux en fonte (T) à emboîtement (M) en vue de leur placement tête-bêche par retournement de 180° d'un tuyau (T) sur deux sur un transporteur (A) de tuyaux à déplacements intermittents séparés par des arrêts réguliers alors que les tuyaux sont disposés par paires sur le transporteur, les emboîtements (M) et bouts unis (U) des deux tuyaux (T) consécutifs étant placés respectivement d'un même côté du transporteur (A) à deux chaînes (2) parallèles, munies chacune de vés (3) régulièrement espacés d'un pas (p), que le transporteur se déplace par avances périodiques égales à deux pas (p) ou intervalles entre deux vés (3) consécutifs d'une même chaîne (2), et que certains tuyaux sont retirés (Q) du transporteur avant d'atteindre le poste de retournement (PI), ce procédé se situant dans un processus de confection de paquets de tuyaux où les tuyaux voisins (T) tête-bêche sont décelés longitudinalement pour réduire l'encombrement caractérisé en ce que, suivant que chaque prochain tuyau à retourner se trouve distant du poste de retournement (PI) d'un nombre pair ou d'un nombre impair de pas, on laisse fixe le poste de retournement ou bien on le déplace en translation d'un pas, parallèlement à la direction de déplacement du transporteur, dans le sens de l'avance du transporteur ou en sens contraire, en vue de placer le poste de retournement au droit d'un tuyau à retourner, avant de retourner le tuyau de 180° pendant un arrêt du transporteur, par élévation au-dessus de la nappe de tuyaux transportés, retournement et pose du tuyau sur le transporteur (A).

2. Procédé suivant la revendication 1, caractérisé en ce que l'on effectue le déplacement en translation d'un pas du poste de retournement d'un tuyau pendant une avance de deux pas des chaînes du transporteur de tuyau.

3. Procédé suivant la revendication 1, caractérisé en ce que l'on décale le milieu du tuyau à retourner par rapport à l'axe de retournement.

4. Dispositif pour la mise en œuvre du procédé suivant la revendication 1 du type comportant le transporteur horizontal (A) de tuyaux à chaînes sans fin parallèles (2) munies de vés (3) de supports de tuyaux, régulièrement espacés d'un pas, et, entre les deux chaînes parallèles (2), d'un poste de retournement ou retourneur (PI) d'un tuyau de 180°, ledit retourneur (PI) portant une gouttière horizontale (21) de support d'un tuyau (T) à emboîtement (M) et bout uni (U), des moyens pour élever la gouttière (21) d'une position basse au-dessous du transporteur (A) à une position haute au-dessus du transporteur (A) et pour abaisser ladite gouttière de la position haute à la position basse, et des moyens pour faire tourner la gouttière en position haute de 180°, caractérisé en ce que, le retourneur (PI) dans son ensemble, avec ses moyens d'élévation et d'abaissement (10-14) d'un tuyau et ses moyens de rotation de 180° d'un tuyau (16-18-22-24-27-28-29) reliés entre eux est porté par un chariot ou baladeur (6) mobile en translation d'un pas dans un sens ou en sens contraire entre deux positions (I) et (II) de retournement d'un tuyau, parallèlement aux chaînes (2) du transporteur (A).

5. Dispositif suivant la revendication 4 caractérisé en ce que les moyens d'élévation et d'abaissement du retourneur (PI) consistent en un parallélogramme articulé dans un plan vertical à bras parallèles (14) portant un châssis (16) qui porte lui-même les moyens d'entraînement en rotation d'un tuyau, lesdits bras parallèles (14) étant articulés à leurs extrémités, d'une part, sur le chariot ou baladeur (6), d'autre part, sur le châssis (16).

6. Dispositif suivant la revendication 5, caractérisé en ce que les bras parallèles (14) sont actionnés par un vérin à peu près vertical (10) articulé horizontalement en (9) sur le chariot ou baladeur (6).

7. Dispositif suivant la revendication 4, caractérisé en ce que les moyens d'entraînement en rotation du retourneur (PI) comportent, en combinaison avec un couple de roues dentées, l'une grande (28), l'autre petite (29), ledit couple étant multiplicateur de vitesse de rotation de la gouttière (21) calée sur le même arbre mené (20) que la petite roue dentée (29), par rapport à la vitesse de rotation de la roue dentée (28), un système articulé accélérateur et décélérateur de rotation à trois barres comprenant une petite manivelle (22) rotative avec un arbre menant ou moteur (19), une grande manivelle (24) rotative avec un arbre mené (25) solidaire en rotation de la grande roue dentée (28), une bielle (27) de liaison avec les manivelles (22 et 24) par deux pivots ou tourillons d'extrémités (23 et 26), les deux manivelles et la bielle du système à trois barres étant horizontales.

8. Dispositif suivant la revendication 7, caractérisé en ce que la roue dentée (28) a un diamètre double de la roue dentée (29) et en ce que la grande manivelle (24) a une longueur double de la petite manivelle (22).

9. Dispositif suivant la revendication 4, caractérisé en ce que le chariot ou baladeur (6) est mû en translation par un vérin (8) parallèle aux chaînes (2) du transporteur (A).

10. Dispositif suivant la revendication 4, caractérisé en ce que la gouttière (21) supporte le tuyau (T) sans fixation, le milieu (C) du tuyau (T) étant décalé d'un excentrement (e) par rapport au milieu de la gouttière (21) qui est sur l'axe (YY) de retournement.

**Claims**

1. Method of handling cast-iron pipes (T) comprising a socket (M) with a view to placing them top to bottom by turning one pipe (T) through 180° on two pipes on a pipe conveyor (A) having intermittent movements separated by regular stoppages when the pipes are placed in pairs on the conveyor, the sockets (M) and male ends (U) of two consecutive pipes (T) being placed respectively on the same side of the conveyor (A) comprising two parallel chains (2), each provided with vees (3) regularly spaced by a step (p), the conveyor moves by periodic forwards movements equal to two steps (p) or intervals between two consecutive vees (3) of the same chain (2) and certain pipes are removed (Q) from the conveyor before reaching the turning station (PI), this method being situated in a process for making up bundles of pipes in which adjacent pipes (T) arranged top to bottom are offset longitudinally in order to reduce the bulk, characterised in that according as each next pipe to be turned is at a distance from the turning station (Pi) of an even or uneven number of steps, the turning station is left stationary or moved longitudinally by one step, parallel to the direction of movement of the conveyor, in the direction of forwards movement of the conveyor or in the opposite direction, with a view to placing the turning station at right angles to a pipe to be turned, before turning the pipe through 180° during a stoppage of the conveyor, by elevation above the layer of pipes conveyed, turning and placing the pipe on the conveyor (A).

2. Method according to Claim 1, characterised in that the longitudinal movement by one step of the station for turning a pipe is effected during a forwards movement by two steps of the chains of the pipe conveyor.

3. Method according to Claim 1, characterised in that the middle of the pipe to be turned is offset with respect to the turning axis.

4. Apparatus for carrying out the method according to Claim 1 of the type comprising the horizontal pipe conveyor (A) comprising parallel endless chains (2) provided with vees (3) for supporting pipes, uniformly spaced by one step and, between the two parallel chains (2), a turning station or turning arrangement (PI) for turning a pipe through 180°, the said turning arrangement (PI) supporting a horizontal cradle (21) supporting a pipe (T) comprising a socket (M) and a male end (U), means for raising the cradle (21) from a lower position below the conveyor (A) to an upper position above the conveyor (A) and for lowering the said cradle from the upper position into the lower position and means for turning the cradle through 180° in the upper position, characterised in that the turning arrangement (PI) in its entirety, with its means (10-14) for raising and lowering a pipe and its means (16-18-22-24-27-28-29) for rotating a pipe through 180°, connected to each other, is supported by a carriage or sliding gear (6) able to move longitudinally by one step in one direction or in the opposite direction between two positions (I) and (II) for turning a pipe, parallel to the chains (2) of the conveyor (A).

5. Apparatus according to Claim 4, characterised in that the lifting and lowering means of the turning arrangement (PI) consist of a parallelogram pivoted in a vertical plane comprising parallel arms (14) supporting a fram (16) which itself supports the means for setting a pipe in rotation, the said parallel arms (14) being pivoted at their ends, on the one hand to the carriage or sliding gear (6), on the other hand to the frame (16).

6. Apparatus according to Claim 5, characterised in that the parallel arms (14) are actuated by an almost vertical jack (10) pivoted horizontally at (9) on the carriage or sliding gear (6).

7. Apparatus according to Claim 4, characterised in that the means of the turning arrangement (PI) for setting a pipe in rotation comprise, in combination with a pair of toothed wheels, a large wheel (28) and a small wheel (29), the said pair multiplying the speed of rotation of the cradle (21) keyed on the same driven shaft (20) as the small toothed wheel (29), with respect to the speed of rotation of the toothed wheel (28), an articulated system for accelerating and decelerating rotation with three bars comprising a small rotary crank (22) with a driving shaft (19), a large rotary crank (24) with a driven 5 haft (25) connected to rotate with the large toothed wheel (28), a connecting rod (27) for connection to the cranks (22 and 24) by two pivots or end journals (23 and 26) the two cranks and the connecting rod of the system having three bars being horizontal.

8. Apparatus according to Claim 7, characterised in that the toothed wheel (28) has a diameter twice that of the toothed wheel (29) and in that the large crank (24) has a length twice that of the small crank (22).

9. Apparatus according to Claim 4, characterised in that the carriage or sliding gear (6) is moved longitudinally by a jack (8) parallel to the chains (2) of the conveyor (A).

10. Apparatus according to Claim 4, characterised in that the cradle (21) supports the pipe (T) without fixing, the middle (C) of the pipe (T) being staggered by an offset (e) with respect to the middle of the cradle (21) which is on the turning axis (YY).

**Patentansprüche**

1. Verfahren zum Handhaben von Rohren (T) aus Gußeisen mit einer Muffe (M) im Hinblick auf ihre Anordnung Kopf bei Fuß durch Umwenden jedes zweiten Rohres (T) auf einem Rohrförderer (A), der mit intermittierenden Verschiebungen arbeitet, die durch regelmäßige Stillstände getrennt sind, wenn die Rohre paarweise auf dem Förderer abgelegt werden, wobei die Muffen (M) und die glatten Enden (U) der beiden aufeinanderfolgenden Rohre (T) auf derselben Seite des Förderers (A) plaziert werden, der mit zwei parallelen Ketten (2) zusammenarbeitet, von denen jede mit V-Schalen (3) versehen ist, die mit einer Teilung (p) regelmäßig im Abstand angeordnet sind, wenn sich der Förderer mit periodischen Vorschüben verschiebt, die gleich zwei Teilungen (p) oder Intervallen zwischen zwei aufeinanderfolgenden V-Schalen (3) ein und derselben Kette (2) sind, und wenn geweisse Rohre vor dem Erreichen der Umwendestation (PI) vom Förderer entfernt werden (Q), wobei sich dieses Verfahren in einem Prozeß zur Anfertigung von Rohrpaketen befindet, in dem die benachbarten Kopf bei Fuß angeordneten Rohre (T) in Längsrichtung versetzt werden, um den Platzbedarf zu verringern, dadurch gekennzeichnet, daß man, je nachdem, ob sich jedes nächste umzuwendende Rohr mit einer geraden oder ungeraden Anzahl von Teilungen im Abstand von der Umwendestation (PI) befindet, die Umwendestation feststehen läßt oder sie um eine Teilung parallel zur Verschieberichtung des Fördereres in Richtung des Vorschubs des Förderers oder in entgegengesetzter Richtung translatorisch verschiebt, um die Umwendestation an der Stelle eines umzuwendenden Rohres zu plazieren, bevor das Rohr während eines Stillstands des Förderers um 180° umgewendet wird durch Anheben über die Lage von transportierten Rohren, durch Drehen und durch Ablegen des Rohres auf dem Förderer (A).

2. Verfahren nach Anspruch 1, dadurch gekennzeichnet, daß man die um eine Teilung erfolgende translatorische Verschiebung der Station für das Umwenden eines Rohres während eines um zwei Teilungen erfolgenden Vorschubs der Ketten des Rohrförderers ausführt.

3. Verfahren nach Anspruch 1, dadurch gekennzeichnet, daß man die Mitte des umzuwendenden Rohres gegenüber der Umwendeachse versetzt.

4. Vorrichtung zur Durchführung des Verfahrens nach Anspruch 1 der Bauart mit dem waagerechten Rohrförderer (A) einschließlich paralleler endloser Ketten (2), die mit einer Teilung regelmäßig im Abstand angeordneten V-Schalen (3) zum Tragen von Rohren versehen sind, um mit einer zwischen den beiden parallelen Ketten (2) angeordneten Station oder einem Umwender zum Umwenden eines Rohres um 180°, wobei der Umwender (PI) folgendes trägt : eine waagerechte Rinne (21) zum Tragen eines Rohrs (T) mit Muffe (M) und glattem Ende (U), Mittel zum Anheben der Rinne (21) von einer tiefen Stellung unterhalb des Förderers (A) in eine hohe Stellung oberhalb des Förderers (A) und zum Absenken der Rinne von der hohen Stellung in die tiefe Stellung, und Mittel zum Umwenden der Rinne in der hohen Stellung um 180°, dadurch gekennzeichnet, daß der Umwender (PI) in seiner Gesamtheit mit seinen miteinander verbunden Mitteln (10-14) zum Anheben und Absenken eines Rohrs (16-18-22-24-27-28-29) von einem Wagen oder einer Wippe (6) getragen wird, die parallel zu den Ketten (2) des Förderers (A) um eine Teilung in einer Richtung oder in der entgegengesetzten Richtung zwischen zwei Positionen (I) und (II) zum Umwenden eines Rohrs translatorisch bewegbar ist.

5. Vorrichtung nach Anspruch 4, dadurch gekennzeichnet, daß die Mittel zum Anheben und Absenken des Umwenders (PI) aus einem in einer senkrechten Ebene angeordneten gelenkigen Parallelogramm mit parallelen Armen (14) bestehen, die ein Gestell (16) tragen, das seinerseits die Mittel zum drehenden Antreiben eines Rohrs trägt, wobei die parallelen Arme (14) an ihren Enden einerseits am Wagen oder an der Wiege, andererseits am Gestell (16) angelenkt sind.

6. Vorrichtung nach Anspruch 4, dadurch gekennzeichnet, daß die parallelen Arme (14) von einem ungefähr senkrechten Stellzylinder (10) betätigt werden, zu der am Wagen oder an der Wippe (6) bei (9) waagerecht angelenkt ist.

7. Vorrichtung nach Anspruch 4, dadurch gekennzeichnet, daß die Mittel zum drehenden Antreiben des Umwenders (PI) enthalten : in Kombination mit einem Paar von Zahnrädern, von denen das eine (28) groß und das andere (29) klein ist, wobei das Paar die Drehzahl der auf derselben Abtreibswelle (20) wie das kleine Zahnrad (29) verkeilten Rinne (21) gegenüber der Drehzahl des Zahnrads (28) vervielfacht, ein mit drei Stäben arbeitendes beschleunigendes und verzögerndes gelenkiges System mit einer kleinen Kurbel (22), die sich zusammen mit der Antriebswelle (19) dreht, mit einer großen Kurbel (24), die sich zusammen mit einer mit dem großen Zahnrad drehfest verbundenen Abtriebswelle (25) dreht, und mit einem Zwischenglied (27), das die Kurbeln (22 und 24) über endseitige Zapfen oder Drehgelenke (23 und 26) miteinander verbindet, wobei die beiden Kurbeln und das Zwischenglied des Systems mit drei Stäben waagerecht sind.

8. Vorrichtung nach Anspruch 7, dadurch gekennzeichnet, daß das Zahnrad (28) den doppelten Durchmesser des Zahnrads (29) hat und daß die große Kurbel (24) die doppelte Länge der kleinen Kurbel (22) hat.

9. Vorrichtung nach Anspruch 4, dadurch gekennzeichnet, daß der Wagen oder die Wippe (6) durch einen zu den Ketten (2) des Förderers (A) parallelen Stellzylinder (8) translatorisch bewegt wird.

10. Vorrichtung nach Anspruch 4, dadurch gekennzeichnet, daß die Rinne (21) das Rohr (T) ohne Befestigung hält, wobei die Mitte (C) des Rohrs (T) um eine Exzentrizität (e) gegenüber der Mitte der Rinne (21) versetzt ist, die sich auf der Umwendeachse (YY) befindet.

Fig. 1

Fig. 1A

**Fig. 2**

Fig. 3

Fig. 4A

Fig. 4

0 092 093

**Fig.5**

0 092 093

**Fig. 6**

0 092 093

Fig. 7

0 092 093

Fig. 8

Fig.9

8

Fig.10

Fig.11

Fig.12

Fig.13

0 092 093

**Fig.14**

**Fig.15**

**Fig.16**